# EUROPÄISCHE PATENTANMELDUNG

(11) **EP 1 956 488 A2**
(43) Veröffentlichungstag der Anmeldung: **13.08.2008**
(21) Anmeldenummer: 08002151.2
(22) Anmeldetag: 06.02.2008
(51) Int. Cl.: G06F 11/273

(54) **Testsystem mit einem Testadapter und Verfahren zum elektrischen Prüfen einer Baugruppe**

(30) Priorität: 12.02.2007 DE 102007007776
(71) Anmelder: Göpel electronic GmbH, 07745 Jena (DE)
(72) Erfinder: Berger, Mario, 07745 Jena (DE); Wenzel, Thomas, 07745 Jena (DE)
(74) Vertreter: Oehmke, Volker

(57) **Zusammenfassung**

Die vorliegende Erfindung betrifft das elektrische Prüfen von Baugruppen mit verschiedenen Schnittstellen mittels eines Testsystems.

Der Erfindung liegt die Aufgabe zugrunde, eine neue Möglichkeit aufzuzeigen, durch die es mit möglichst geringem Aufwand gelingt, die verschiedenen Funktionsprüfungen über eine standardisierte Schnittstelle zu realisieren.

Erfindungsgemäß wird die Aufgabe mit einer Anordnung dadurch gelöst, dass der Testadapter des Testsystems über einen rekonfigurierbaren Kern verfügt, d.h. es kann jede beliebige Funktion in diesen geladen werden. Das ermöglicht einerseits das Bereitstellen der seitens der Schnittstelle zum Prüfling geforderten Strukturen (Boundary Scan Logik, USB-Controller, Spannungsmesser) und andererseits eine beliebige Protokollumsetzung an der Schnittstelle zum Testsystem (Testbus gemäß Boundary Scan Standard, Adress-, Daten- und Steuersignale, Messsignale).

## Beschreibung

Seit es Leiterplatten gibt, besteht die Notwendigkeit deren Funktionalität zu prüfen. Die Funktionalitätsprüfung lässt sich dabei im allgemeinen in drei verschiedene Prüfungen unterscheiden. Zum einem wird die reine elektrische Funktionalität der Leiterplatte geprüft, zum anderen werden rein statische Zustände geprüft und abschließend will man die Richtigkeit der dynamischen Abläufe auf der Leiterplatte testen. Dazu ist es unabdingbar, dass elektrische Signale von dieser nach außen geführt bzw. von außen elektrische Signale in die Leiterbahnen der Leiterplatte eingespeist werden. Dies geschieht in aller Regel über verschiedenste Schnittstellen.

Diese Schnittstellen müssen, bevor das fertige Produkt ausgeliefert werden kann, geprüft werden. Hierzu gibt es eine Vielzahl unterschiedlicher Ansätze, dies zu realisieren. Für einen elektrischen Test ist es jedoch unabdingbar, die Schnittstelle mit einem entsprechenden Testadapter zu kontaktieren.
Im ersten Prüfschritt soll die reine elektrische Verbindung zwischen dem auf der Baugruppe befindlichen USB-Controller und dem USB-Steckverbinder überprüft werden. Unter der Annahme, dass der USB-Controller über Strukturen gemäß dem Boundary Scan Standard IEEE1149.1 verfügt und darüber getestet werden soll, muss ein Testadapter eingesetzt werden, der über die gleichen Strukturen verfügt. Die Verbindungen zwischen dem Prüfling und dem Testsystem bzw. zwischen dem Testadapter und dem Testsystem erfolgt über dem im Boundary Scan Standard beschriebenen Testbus. Die Vorgehensweise ist unter anderem in der Patentschrift US 5,852,617 A offenbart. Der Vorteil dieses ersten Prüfschrittes liegt in einer detaillierten Fehleraussage; der Nachteil darin, dass nur statische Fehler erkannt werden können. Aus diesem Grund ergibt sich die Notwendigkeit eines weiteren, zweiten Prüfschrittes.
In dem zweiten Prüfschritt sollen nun eventuell vorhandene, dynamische Fehler erkannt werden. Aus diesem Grund werden echte Datenpakete in maximaler Übertragungsgeschwindigkeit über die USB-Schnittstelle geschickt. Zu diesem Zweck wird der erste Testadapter (mit Boundary Scan Strukturen) durch einen Zweiten ausgetauscht, welcher über die notwendige Infrastruktur verfügt. Typischerweise ist das ein vollwertiger USB-Controller. Die Verbindungen zum Testsystem sind nun Adress-, Daten- und Steuersignale oder auch Debug-Signale für die beiden USB-Controller (auf dem Prüfling und im Testadapter). Die USB-Verbindung kann somit unter echten Einsatzbedingungen geprüft werden.
Ein dritter und letzter Prüfschritt soll nunmehr die Prüfung der USB-Schnittstelle komplettieren. In diesem soll die vom Prüfling an dem USB-Steckverbinder zur Verfügung gestellte Spannung getestet werden. Hierzu wird jetzt ein Testadapter benötigt, welcher über entsprechende Funktionen zum Messen von Spannungen verfügt. Die Verbindung zwischen Testadapter und Testsystem dient in diesem dritten Prüfschrift der Übertragung von Spannungsinformationen.
Dieses einfache Beispiel zeigt auf, dass derzeit drei verschiedene Testadapter benötigt werden, um eine Schnittstelle einer Baugruppe zufriedenstellend zu testen. Weiterhin werden drei verschiedene Schnittstellenarten (Protokolle) seitens des Testsystems benötigt (Boundary Scan Testbus, Adress-, Daten und Steuerbus sowie ein Messbus).

Der Erfindung liegt die Aufgabe zugrunde, eine neue Möglichkeit aufzuzeigen, durch die es mit möglichst geringem Aufwand gelingt, die verschiedenen Funktionsprüfungen über eine standardisierte Schnittstelle zu realisieren.

Erfindungsgemäß wird die Aufgabe mit einer Anordnung dadurch gelöst, dass der Testadapter des Testsystems über einen rekonfigurierbaren Kern verfügt, d.h. es kann jede beliebige Funktion in diesen geladen werden. Das ermöglicht einerseits das Bereitstellen der seitens der Schnittstelle zum Prüfling bzw. zur Baugruppe, wobei unter Baugruppe eine bestückte Leiterplatte zu verstehen sein soll, geforderten Strukturen (Boundary Scan Logik, USB-Controller, Spannungsmesser) und andererseits eine beliebige Protokollumsetzung an der Schnittstelle zum Testsystem (Testbus gemäß Boundary Scan Standard, Adress-, Daten- und Steuersignale, Messsignale).

Ein besonderer Vorteil der vorliegenden Erfindung besteht zudem darin, dass die Datenverbindung zwischen dem Testadapter und dem Testsystem dazu nachgenutzt wird, um den variablen Kern des Testadapters zu rekonfigurieren. Hierzu befindet sich in dem Testadapter eine Weiche, welche die Informationen entsprechend verteilt.

Ein weiterer Vorteil der Erfindung besteht darin, dass gegenüber dem jetzigen Stand der Technik nicht mehr drei Testadapter, sondern lediglich ein einziger Testadapter benötigt wird, um die gleichen Prüfaufgaben zu erfüllen.

Die Erfindung soll nachstehend anhand von Ausführungsbeispielen näher erläutert werden. Die Zeichnungen zeigen:
- Fig.1: einen Prüfaufbau zum elektrischen Prüfen einer Schnittstelle einer Baugruppe
- Fig.2: eine schematische Darstellung einer bevorzugten Ausführungsform des Testadapters der Erfindung

Nachfolgend wird am Beispiel des Testens einer USB-Schnittstelle einer Baugruppe die Erfindung näher beschrieben.

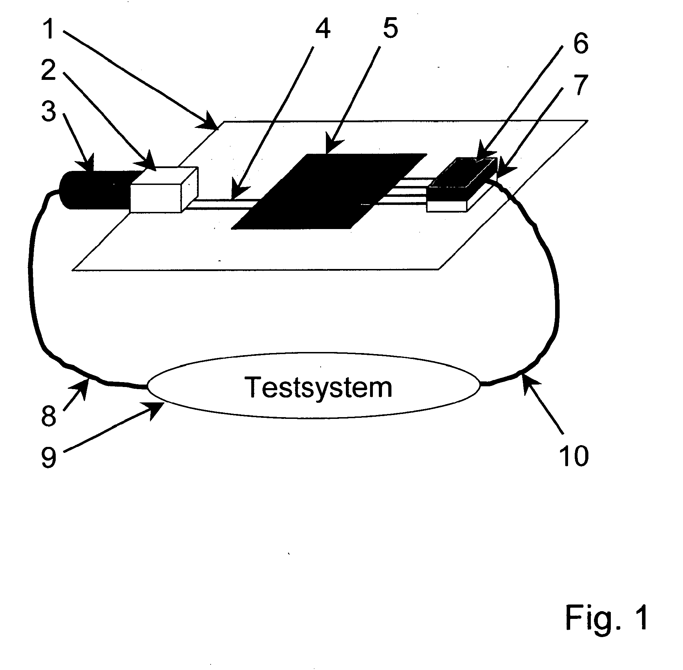

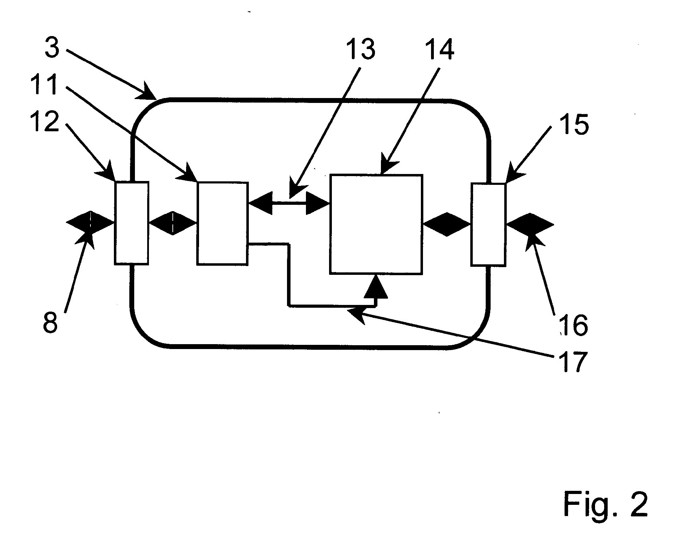

Vor Testbeginn wird gemäß Fig. 1 zunächst der Testadapter 3, der über eine standardisierte Schnittstelle 12, siehe Fig. 2, verfügt, über die Kommunikationsverbindung 8 mit dem Testsystem 9 verbunden. Der Testadapter 3 wird dadurch mit der Betriebsspannung versorgt und konfiguriert seinen variablen Kern 14 mit einer vorgegebenen Standardfunktion. In dem Beispiel soll dies eine Boundary Scan Struktur gemäß Standard IEEE1149.1 sein.
Anschließend wird der Testadapter 3 auf die zu testende USB-Schnittstelle 2 der Baugruppe 1 aufgesteckt. Somit besteht eine elektrische Verbindung zwischen dem variablen Kern 14 über die Schnittstelle 15, dem Gegenstück zu der zu testenden USB-Schnittstelle 2, die USB-Schnittstelle 2, die Leiterbahnen 4 hin zum USB-Controller 5.
Der USB-Controller 5 soll über Strukturen gemäß dem Boundary Scan Standard -IEEE1149.1 verfügen. Der hierfür notwendige Testbus ist an der Debug-Schnittstelle 7 verfügbar, die ihrerseits über den Debug-Adapter 6 und die Kommunikationsverbindung 10 mit dem Testsystem 9 verbunden ist.
Das Testsystem 9 kann unter diesen Gegebenheiten einen statischen Verbindungstest gemäß dem Boundary Scan Standard IEEE1149.1 durchführen. Die Synchronisation zwischen dem USB-Controller 5 und dem variablen Kern 14 erfolgt über den Testbus, wobei dieser seitens des USB-Controllers 5 direkt an dem Testsystem 9 anliegt und seitens des Testadapters 3 über die Verbindung 8 emuliert werden muss.
Nachdem dieser erste Prüfschritt durchgeführt wurde, folgt nun der Test zum Übertragen echter Datenpakete. Hierfür muss allerdings zunächst der variable Kern 14 so rekonfiguriert werden, dass er die Funktion eines USB-Controllers erfüllt. Zu diesem Zweck sendet das Testsystem 9 eine Information an die Weiche 11 zum Umschalten auf die Rekonfigurationsschnittstelle des variablen Kerns 14. Der variable Kern 14 wird daraufhin über die Kommunikationsverbindung 8, Schnittstelle 12, Weiche 11 und die Kommunikationsverbindung 17 mit den Informationen vom Testsystem 9 rekonfiguriert. Nach dem letzten Datenpaket erhält die Weiche 11 die Anweisung, wieder zurück auf die Kommunikationsverbindung 13 zu schalten, wodurch die Kommunikation zwischen Testsystem 9 und den Ein- und Ausgängen des variablen Kerns 14 des Testadapters 3 wieder hergestellt ist.
Seitens des USB-Controllers 5 auf der Baugruppe 1 existiert nach wie vor die Verbindung zwischen der Debug-Schnittstelle 7 und dem Testsystem 9. Auf diesem Weg kann nun der USB-Controller 5 vom Testsystem 9 angewiesen werden, ein Datenpaket an die zu testende USB-Schnittstelle 2 zu senden. Der Testadapter 3, welcher nun einen vollwertigen USB-Controller beinhaltet, empfängt das Datenpaket über seine Schnittstelle 15 und kann die Information an das Testsystem 9 weitergeben. In gleicher Art und Weise kann die Information auch vom Testadapter 3 gesendet und vom USB-Controller 5 empfangen werden.
Das Beispiel soll mit einem dritten und letzten Prüfschritt abgeschlossen werden. In diesem soll nunmehr die Gleichspannung an der USB-Schnittstelle 2 überprüft werden. Wie auch im Schritt zuvor, muss als erstes der variable Kern 14 des Testadapters 3 rekonfiguriert werden. Dies geschieht auf die gleiche Weise wie im vorigen Prüfschritt beschrieben, nur das jetzt die Funktion eines AD-Wandlers programmiert wird. Ist die Rekonfiguration des Testadapters 3 abgeschlossen, braucht das Testsystem 9 anschließend nur eine entsprechende Anweisung an den Testadapter 3 zu senden, um die Spannung der USB-Schnittstelle 2 zu messen. Das Ergebnis gelangt über die Kommunikationsverbindung 8 an das Testsystem 9, welches den gemessenen Wert auswertet.
Der wesentliche Vorteil der Erfindung besteht darin, dass das Testsystem 9 über nur eine standardisierte Schnittstelle zum Testadapter 3 verfügen muss, über die die verschiedenen Protokolle emuliert werden und über die sich der variable Kern 14 jederzeit rekonfigurieren lässt. Dabei ist auch klar, dass der Variabilität des Testadapters 3 keine Grenzen gesetzt sind, egal ob es sich um ein Ethernet-Controller, ein FireWire-Controller, ein Osziloskop oder ein Frequenzgenerator handelt.
Um dieser Flexibilität des variablen Kerns 14 auch physisch gerecht zu werden, empfiehlt es sich in einem weiteren Ausführungsbeispiel der Erfindung, das Gegenstück 15 zu der zu testenden Schnittstelle 2 des Testadapters 3 austauschbar zu gestallten.
Auch soll erwähnt sein, dass die Ausführungsformen der Kommunikationsverbindungen 8 und 16 keinen Einfluss auf den Gedanken der Erfindung haben. Hierbei kann es sich um bedrahtete oder drahtlose Verbindungen handeln. Ebenfalls sei erwähnt, dass sämtliche Verbindungsleitungen im allgemeinen bidirektional ausgeführt sind.

### Bezugszeichenliste

- 1: Baugruppe / Prüfling
- 2: zu testende Schnittstelle (beispielhaft USB-Schnittstelle)
- 3: Testadapter
- 4: Leiterbahnen
- 5: Schnittstellen-Controller (beispielhaft USB-Controller)
- 6: Debug-Adapter
- 7: Debug-Schnittstelle
- 8: Kommunikationsverbindung zwischen Testadapter 3 und Testsystem 9
- 9: Testsystem
- 10: Kommunikationsverbindung zwischen Debug-Adapter 6 und Testsystem 9
- 11: Weiche
- 12: standardisierte Schnittstelle
- 13: Kommunikationsverbindung zwischen den Ein- und Ausgängen des variablen Kerns 14 und der Weiche 11
- 14: variabler Kern
- 15: Gegenstück zu der zu testenden Schnittstelle 2
- 16: Kommunikationsverbindung zwischen dem Testadapter 3 und der zu testenden Schnittstelle 2
- 17: Kommunikationsverbindung zwischen der Rekonfigurationsschnittstelle des variablen Kerns 14 und der Weiche 11

## Patentansprüche

1. Testsystem mit einem Testadapter und einem Debug-Adapter zum Prüfen einer Baugruppe, die neben einer Debug-Schnittstelle mindestens eine weitere Schnittstelle aufweist, **dadurch gekennzeichnet, dass**
- der Testadapter (3) eingangsseitig eine standardisierte Schnittstelle (12) aufweist, die über eine Kommunikationsverbindung (8) mit dem Testsystem (9) verbunden ist,
- der Testadapter (3) ausgangsseitig ein Gegenstück (15) zu der zu testenden Schnittstelle (2) der Baugruppe aufweist,
- die Schnittstelle (12) über eine Weiche (11) und einen variabler Kern (14), der neben seinem Eingang und Ausgang eine Rekonfigurationsschnittstelle aufweist, mit dem Gegenstück (15) verbunden ist, wobei der erste Ausgang der Weiche (11) über eine Kommunikationsverbindung (13) mit dem variablen Kern (14) und der zweite Ausgang der Weiche (11) über eine Kommunikationsverbindung (17) mit der Rekonfigurationsschnittstelle des variablen Kerns (14) in Verbindung steht.

2. Testsystem nach Anspruch 1, **dadurch gekennzeichnet,**
**dass** das Gegenstück (15) entsprechend der Ausführung der zu testenden Schnittstelle (2) austauschbar ausgeführt ist.

3. Testsystem nach Anspruch 1 oder 2, **dadurch gekennzeichnet,**
**dass** die Kommunikationsverbindung (8) zwischen Testadapter (3) und Testsystem (9) als eine drahtlose Kommunikationsschnittstelle ausgebildet ist.

4. Testsystem nach Anspruch 1 bis 3, **dadurch gekennzeichnet,**
**dass** die Verbindung (16) zwischen Testadapter (3) und der zu testenden Schnittstelle (2) als eine drahtlose Kommunikationsschnittstelle ausgebildet ist.

5. Verfahren mittels Testsystem nach einem der vorhergehenden Ansprüche zum elektrischen Prüfen einer Baugruppe, durch folgende Schritte **gekennzeichnet**:
a) die zu testende Schnittstelle (2) der Baugruppe (1) wird über den Testadapter (3) und die Debug-Schnittstelle (7) der Baugruppe (1) über den Debug-Adapter (6) mit dem Testsystem (9) verbunden,
b) die Baugruppe (1) wird mittels einer im variablen Kern (14) des Testadapters (3) befindlichen ersten Funktion und über einen Informationsaustausch zwischen Testadapter (3) und Testsystem (9) über die Kommunikationsverbindung (8) überprüft,
c) der variable Kern (14) des Testadapters (3) wird über die Kommunikationsverbindung (8), Schnittstelle (12), Weiche (13) und Kommunikationsverbindung (17) rekonfiguriert und übernimmt ab sofort eine weitere Funktionsprüfungsmöglichkeit.

6. Verfahren nach Anspruch 5, **dadurch gekennzeichnet,**
**dass** Verfahrensschritt b) und c) solange nacheinander durchgeführt werden, bis sämtliche Funktionsprüfungsmöglichkeiten durchlaufen wurden.
